# EUROPÄISCHE PATENTANMELDUNG

(11) **EP 2 781 177 A1**
(43) Veröffentlichungstag der Anmeldung: **24.09.2014**
(21) Anmeldenummer: 14161179.8
(22) Anmeldetag: 21.03.2014
(51) Int. Cl.: A47J 37/12, H05B 6/12

(54) **Induktionsfritteuse mit Spulenkühlung**

(30) Priorität: 21.03.2013 DE 102013102881
(71) Anmelder: KSF Grillgeräte GmbH, 93489 Schorndorf (DE)
(72) Erfinder: Sturz, Manfred, 93489 Schorndorf (DE)
(74) Vertreter: Bittner, Bernhard

(57) **Zusammenfassung**

Eine Vorrichtung zum Erwärmen von Flüssigkeiten, mit einem Gestell (2), in dem ein Behältnis (4) zur Aufnahme eines flüssigen Mediums angeordnet ist, wobei das Behältnis (4) wenigstens abschnittsweise aus einem stromleitenden Material besteht und die Vorrichtung eine ein Magnetfeld erzeugende Induktionseinrichtung (6) aufweist, wobei diese Induktionseinrichtung (6) außerhalb des Behältnisses (4) derart angeordnet ist, dass sie wenigstens eine Außenwandung (4a) des Behältnisses (4) mit einem Magnetfeld beaufschlagt. Erfindungsgemäß ist die Induktionseinrichtung (6) an einem Träger angeordnet ist, der wenigstens eine Öffnung aufweist.

## Beschreibung

Die vorliegende Erfindung bezieht sich auf eine Vorrichtung zum Erwärmen von Flüssigkeiten. Die Erfindung wird unter Bezugnahme auf eine Fritteuse beschrieben, es wird jedoch darauf hingewiesen, dass die vorliegende Erfindung auch gegebenenfalls für andere Erwärmungsvorrichtungen wie beispielsweise Vorrichtungen zum Erwärmen von Wasser für Teigwaren oder dergleichen geeignet sein kann.

Im Stand der Technik weisen derartige Fritteusen üblicherweise Behältnisse auf, in denen eine Frittierflüssigkeit, wie insbesondere Öl, erhitzt wird. Zum Erhitzen dient dabei üblicherweise ein elektrisches Element, welches innerhalb des Behältnisses angeordnet ist und das Öl erhitzt. Auf diese Weise wird ein befriedigendes Frittierergebnis erreicht. Gleichwohl ist es teilweise sehr mühsam, entsprechende elektrische Heizeinrichtungen nach dem Gebrauch zu reinigen, da sie naturgemäß mit der Frittierflüssigkeit in Kontakt kommen.

Weiterhin sind aus dem Stand der Technik auch Fritteusen bekannt, welche Brenner, insbesondere Gasbrenner, aufweisen, welche das besagte Behältnis erhitzen. Derartige Fritteusen sind jedoch insbesondere in der gewerblichen Anwendung stets auf einen Gasanschluss angewiesen.

Aus der WO 2008/089590 A2 ist eine Induktionsfrittiervorrichtung bekannt. Diese Vorrichtung weist einen Frittierbehälter mit einer Kaltzone und je einer Induktionsspule in einem Bodenbereich und in einem seitlichen Bereich des Frittierbehälters auf. Weiterhin ist eine Temperaturmessvorrichtung vorgesehen, wobei eine Regeleinheit die einzelnen Heizelemente dieser Induktionsfrittiervorrichtung individuell ansteuert. Insbesondere ist bei dieser Vorrichtung jeder Induktionsspule genau eine Temperaturmessvorrichtung zugeordnet. Die in der WO 2008/089590 A2 beschriebene Vorrichtung erlaubt ein Ansteuern der einzelnen Induktionsspulen, ist jedoch bedingt durch die mehreren Heizelemente und insbesondere auch die individuelle Zuordnung mehrerer Temperaturmessvorrichtungen zu den einzelnen Heizelementen regelungstechnisch relativ kompliziert ausgestaltet.

Die Anmelderin hat bei der Entwicklung und bei dem Betrieb der Induktionsfritteusen festgestellt, dass diese relativ häufig während des Betriebs abschalten, bzw. überhitzen. Der vorliegenden Erfindung liegt daher die Aufgabe zugrunde, den Betrieb derartiger Induktionsfritteusen zu stabilisieren. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Erwärmen von Flüssigkeiten weist ein Gestell auf, in oder an dem ein Behältnis zur Aufnahme eines flüssigen Mediums angeordnet ist, wobei das Behältnis wenigstens abschnittsweise aus einem stromleitenden Material besteht und die Vorrichtung eine ein Magnetfeld erzeugende Induktionseinrichtung aufweist, wobei diese Induktionseinrichtung außerhalb des Behältnisses derart angeordnet ist, dass sie wenigstens eine Außenwandung des Behältnisses mit einem Magnetfeld beaufschlagt.

Erfindungsgemäß ist die Induktionseinrichtung an einem Träger angeordnet und/oder befestigt, der wenigstens eine Öffnung aufweist. Es wäre jedoch auch möglich, dass der Träger der Induktionseinrichtung auch als das Gestell funktioniert, an dem das Behältnis angeordnet ist. Auch wäre es möglich, dass die Vorrichtung ohne das besagte Gestell auskommt oder das Gestell lediglich in Form von Stützelementen ausgebildet ist, welche an dem Behältnis angeordnet sind.

Die von der Anmelderin entwickelten Induktionsfritteusen weisen üblicherweise Induktionseinrichtungen und insbesondere Induktionsspulen auf, die selbst wiederum an einen Träger angeordnet sind. Die Anmelderin hat herausgefunden, dass das Versehen dieses Trägers mit Öffnungen zu erheblichen Verbesserungen der Kühlwirkung der Induktionsspule führen kann. Weiterhin hat die Anmelderin herausgefunden, dass insbesondere eine Überhitzung dieser Induktionsspule verantwortlich für ein häufiges Abschalten der Induktionsvorrichtung war.

Es wird daher erfindungsgemäß vorgeschlagen, dass die Vorrichtung eine (aktive oder passive) Kühleinrichtung aufweist, welche wenigstens einen Bestandteil der Induktionseinrichtung und insbesondere eine Induktionsspule mit einem Kühlmedium beaufschlagt bzw. versorgt oder es wird zumindest diese Versorgung mit einem Kühlmittel und insbesondere mit einem Kühlmittelstrom erleichtert.

Bei einer weiteren erfindungsgemäßen Ausgestaltung ist die Induktionseinrichtung in einem vorgegebenen Abstand von der Außenwandung des Behältnisses angeordnet, derart, dass zwischen der Induktionseinrichtung und der Außenwandung ein Luftspalt ausgebildet ist.

Üblicherweise liegen derartige Induktionseinrichtungen bzw. Induktionsspulen direkt an dem Behältnis an oder sind nur über eine Isolierung von diesem getrennt, um so ein maximal mögliches Magnetfeld in dem Behältnis zu induzieren. Die Anmelderin hat jedoch herausgefunden, dass einerseits ein bestimmter Abstand zu der Außenwandung des Behältnisses in Kauf genommen werden kann, ohne dass hierbei erhebliche Leistungsänderungen einhergehen und dass andererseits mit diesem vorbestimmten Abstand und dem sich hieraus ergebenden Luftspalt die Kühlwirkung auf die Induktionsspule erheblich verbessert werden kann. In diesem Falle wird die Kühleinrichtung für die Induktionseinrichtung auch durch den besagten Luftspalt ausgebildet.

Bei einer weiteren vorteilhaften Ausführungsform ist der Abstand zwischen der Induktionsspule und dem zu erwärmenden Abschnitt des Behältnisses veränderbar. Damit ist vorteilhaft die Größe des Luftspalts veränderbar. Auf diese Weise kann unterschiedlichen Bedingungen Rechnung getragen werden, etwa unterschiedlichen Umgebungstemperaturen. Dabei ist es möglich, dass der Abstand durch einen Benutzer manuell veränderbar ist. Weiterhin ist es möglich, dass die Vorrichtung eine Anzeigeeinrichtung aufweist, mit welcher der Abstand zwischen dem Behältnisboden und der Induktionseinrichtung abgelesen werden kann.

Weiterhin wäre es auch möglich, dass Stelleinrichtungen vorgesehen sind, welche einen Abstand zwischen dem Behältnisboden und der Induktionsspule einstellen können, beispielsweise in Abhängigkeit von einer festgestellten Temperatur der Induktionsspule.

Bei einer weiteren vorteilhaften Ausführungsform ist die Induktionseinrichtung bzw. die Spule zu der Außenwandung in einem Abstand beabstandet, der zwischen 2 mm und 20 mm, bevorzugt zwischen 4 mm und 12 mm und besonders bevorzugt zwischen 6 mm und 10 mm liegt. Die Anmelderin hat herausgefunden, dass diese genannten Abstände einerseits noch eine ausreichende Erwärmungsleistung auf die Außenwandung ermöglichen, andererseits jedoch die Kühlmöglichkeiten stark verbessert werden können.

Insbesondere hat sich ein Abstand im Bereich von 8 mm als besonders vorteilhaft erwiesen.

Bei einer weiteren vorteilhaften Ausführungsform weist der Träger wenigstens ein Loch auf. Vorteilhaft kann der Träger eine Vielzahl von Löchern und/oder Schlitzen aufweisen, durch welche hindurch bevorzugt auch ein gasförmiges Kühlmedium und insbesondere Luft treten kann.

Bei einer weiteren vorteilhaften Ausführungsform besteht zwischen der besagten Ausnehmung in dem Träger und dem oben erwähnten Luftspalt eine Strömungsverbindung. Dies bedeutet, dass eine Kühlung der Induktionseinrichtung und insbesondere der Induktionsspule vollständig möglich ist.

Bei einer weiteren vorteilhaften Ausführungsform weist die Vorrichtung ein aktives Kühlelement auf, wie insbesondere einen Lüfter, der die Induktionseinrichtung, d.h. insbesondere die Spule mit Kühlluft bzw. einem Kühlmittelstrom beaufschlagt. Damit ist bevorzugt eine Kühleinrichtung, beispielsweise in Form eines Lüfters vorgesehen, welche die Beaufschlagung der Induktionsspule mit einem Kühlmittelstrom ermöglicht.

Vorteilhaft erzeugt dabei dieses Kühlelement eine Strömung zwischen der besagten Öffnung des Trägers und dem Luftspalt zwischen der Spule und der Behältniswandung. Bevorzugt erstreckt sich der Luftspalt entlang im Wesentlichen des gesamten Querschnitts der Spuleneinrichtung.

Bei einer weiteren vorteilhaften Ausführungsform ist wenigstens ein Abschnitt der Behältniswandung und insbesondere derjenige Abschnitt, der von der Induktionseinrichtung mit dem magnetischen Feld beaufschlagt wird, aus einem Mehrschichtmaterial aufgebaut. Besonders bevorzugt handelt es sich hierbei um ein dreischichtiges Material, bei dem bevorzugt die Materialien der jeweiligen äußeren Schichten übereinstimmen und zwischen diesen Schichten ein weiteres Material angeordnet ist.

Vorteilhaft weist das Behältnis wenigstens abschnittsweise und insbesondere wenigstens in einem Abschnitt, der von der Induktionseinrichtung mit dem Magnetfeld beaufschlagt wird einen Verbundwerkstoff auf, wobei eine der Komponenten dieses Verbundwerkstoffs Aluminium enthält bzw. aus Aluminium besteht und eine zweite Komponente des Verbundwerkstoffs einen von Aluminium abweichenden Werkstoff. Vorzugsweise enthält die zweite Komponente einen ferromagnetischen Werkstoff.

Es wird daher vorgeschlagen, nicht wie bisher im Stand der Technik üblich, das genannte Behältnis aus einem Werkstoff beispielsweise aus Stahl herzustellen sondern aus mehreren Komponenten, welche in besonders vorteilhafter Weise zusammen wirken. Grundsätzlich wäre Aluminium besonders geeignet, da es ein sehr guter Wärmeleiter ist. Der Nachteil von Aluminium besteht darin, dass es insbesondere für den Einsatz von induktiven Heizeinrichtungen nicht geeignet ist. Diese Aufgabe übernimmt die zweite Komponente welche den von Aluminium abweichenden Werkstoff aufweist. Insbesondere weist dabei die zweite Komponente einen magnetischen Werkstoff auf, der auf das magnetische Feld der Induktionseinrichtung anspricht.

Vorteilhaft ist der zweite Werkstoff aus einer Gruppe von Werkstoffen ausgewählt, welche Stahl, Edelstahl, Titannickellegierungen, Kupfer, Kombinationen hieraus und dergleichen enthält.

Vorteilhaft besteht die Innenwandung des Behältnisses aus der weiteren Komponente. Dabei kann besonders vorteilhaft vorgesehen sein, dass die erste Komponente als Schicht vorliegt, welche zwischen zwei weiteren Schichten der zweiten Komponente liegt. Vorteilhaft ist das Behältnis vollständig aus dem genannten Verbundwerkstoff hergestellt und weist dabei bevorzugt in seiner Gesamtheit die genannten drei Schichten auf. Optional können weitere Schichten wie Isolierschicht, Lackschichten und dergleichen vorgesehen sein. Auf diese Weise kann durch die Verwendung der mittleren Aluminiumschicht eine schnelle Wärmeverteilung über das gesamte Behältnis erreicht werden selbst wenn die Erwärmung über das Magnetfeld nur in einem Bereich erfolgt. Unter einem Verbundwerkstoff werden also vorteilhaft übereinander angeordnete Schichten unterschiedlicher Materialien verstanden.

Vorzugsweise weist die Wandung des Behältnisses, also der gesamte Materialverbund eine Dicke auf, welche zwischen 8mm und 30 mm, bevorzugt zwischen 10mm und 25mm und besonders bevorzugt zwischen 10mm und 20mm liegt. In aufwändigen Untersuchungen konnte ermittelt werden, dass die genannten Schichtdicken sich in besonderer Weise eigenen, um den unterschiedlichen Anforderungen an Stabilität, Wärmeleitfähigkeit und Wärmeübertragung an die Flüssigkeit gerecht zu werden.

Vorteilhaft setzt sich die Außenwandung des Behältnisses wenigstens abschnittsweise und insbesondere in einem von dem Magnetfeld beaufschlagten Bereich aus wenigstens zwei schichtartig übereinander angeordneten Komponenten unterschiedlichen Materials zusammensetzt. Es wäre dabei auch möglich, dass das Behältnis selbst ein konventionelles Behältnis ist, welches gegebenenfalls auch aus einem nicht ferromagnetischen Material besteht, wobei jedoch in einem bestimmten Bereich des Behältnisses, insbesondere einem Bodenbereich ein ferromagnetisches Element, beispielsweise eine ferromagnetische Grundplatte angeordnet ist, welche entsprechend von der Induktionseinrichtung erwärmt werden kann und auf diese Weise auch das Behältnis erwärmt. Dabei könnte eine derartige Platte auch zu einer Stabilisierung des Behältnisbodens beitragen.

Bei dieser Ausgestaltung nimmt diese Trageplatte die Funktion der durch das Magnetfeld zu erwärmenden ersten Komponente wahr. Vorteilhaft ist dabei das Behältnis bzw. dessen Boden vollflächig an dieser Tragplatte angeordnet, so dass ein günstiger Wärmeübergang möglich ist.

Die vorliegende Erfindung ist weiterhin auf ein Verfahren zum Erwärmen von Flüssigkeiten gerichtet. Dabei wird mittels einer Induktionseinrichtung wenigstens eine Wandung eines Behältnisses, in dem sich eine zu erwärmende Flüssigkeit befindet, erwärmt, wobei diese Induktionseinrichtung von der zu erwärmenden Wandung beabstandet wird. Erfindungsgemäß wird wenigstens ein Bestandteil der Induktionseinrichtung gekühlt, indem ein gasförmiges Medium an diesen Bestandteil der Induktionseinrichtung geführt wird.

Es wird damit auch verfahrensseitig vorgeschlagen, dass wenigstens ein Bereich der Induktionseinrichtung und insbesondere die Induktionsspule durch Beaufschlagung mit einem gasförmigen Medium und insbesondere mit Luft gekühlt wird. Es wäre dabei auch möglich, dass die zur Kühlung verwendete Luft anschließend noch zu einem weiteren Zweck verwendet wird, etwa zu einer zusätzlichen Erwärmung der Seitenwände des Behältnisses.

Bei einem vorteilhaften Verfahren wird das gasförmige Medium mittels eines Luftspalts zwischen der Induktionseinrichtung und der Behältniswandung und/oder mittels wenigstens einer Öffnung, die in einem Träger, an dem die Induktionseinrichtung angeordnet ist, an den Bestandteil der Induktionseinrichtung geführt. Bevorzugt wird daher die Zuführung eines Luftstroms an die Induktionseinrichtung von wenigstens zwei unterschiedlichen Seiten her ermöglicht und insbesondere von zwei bezüglich der Induktionseinrichtung gegenüberliegenden Seiten.

Vorteilhaft wird wenigstens zeitweise eine aktive Kühlung vorgenommen d.h. es ist eine Lüftereinrichtung vorgesehen, welche wenigstens zeitweise einen Luftstrom erzeugt, der zur Kühlung der Induktionseinrichtung und insbesondere der Induktionsspule verwendet wird.

Bei einer weiteren vorteilhaften Ausführungsform weist die Vorrichtung eine Steuerungseinrichtung auf, welche die Vorrichtung bei thermischer Überlastung abschaltet. Bevorzugt weist die Vorrichtung eine Temperaturmesseinrichtung auf, welche insbesondere eine Temperatur von Bestandteilen der Induktionseinrichtung und insbesondere von Bestandteilen der Induktionsspule(n) misst.

Bei einer weiteren vorteilhaften Ausführungsform wäre es auch denkbar, dass zwischen der Induktionseinrichtung und der Außenwandung Abstandshalterelemente vorgesehen sind, die einen vorbestimmten Abstand zwischen der Induktionseinrichtung und der Außenwandung gewährleisten.

Dabei könnte es sich insbesondere um Abstandshalteeinrichtungen handeln, welche aus einem nicht magnetischen bzw. nicht magnetisierbaren Material hergestellt sind.

Bevorzugt sind Abstandshalterelemente vorgesehen, welche die Spuleneinrichtung von dem Träger beabstanden. Bevorzugt ist auch ein Abstand zwischen der Spuleneinrichtung und dem Träger veränderbar. Dabei ist es auch hier möglich, dass dieser Abstand durch den Benutzer, insbesondere in Abhängigkeit von Umgebungsbedingungen eingestellt wird.

Weitere Vorteile und Ausführungsformen ergeben sich aus den beigefügten Zeichnungen:
Darin zeigen:
   - Fig. 1: eine Querschnittsdarstellung einer erfindungsgemäßen Vorrichtung zum Frittieren;
   - Fig. 2: eine detailliertere Darstellung einer Induktionseinrichtung;
   - Fig. 3: eine Seitenansicht einer erfindungsgemäßen Ausführungsform;
   - Fig. 4: eine Darstellung eines Abschnittes des Behältnisses;
   - Fig. 5: eine Darstellung eines Trägers für die Induktionseinrichtung; und
   - Fig. 6: eine weitere perspektivische Darstellung eines Trägers für die Induktionsspule.

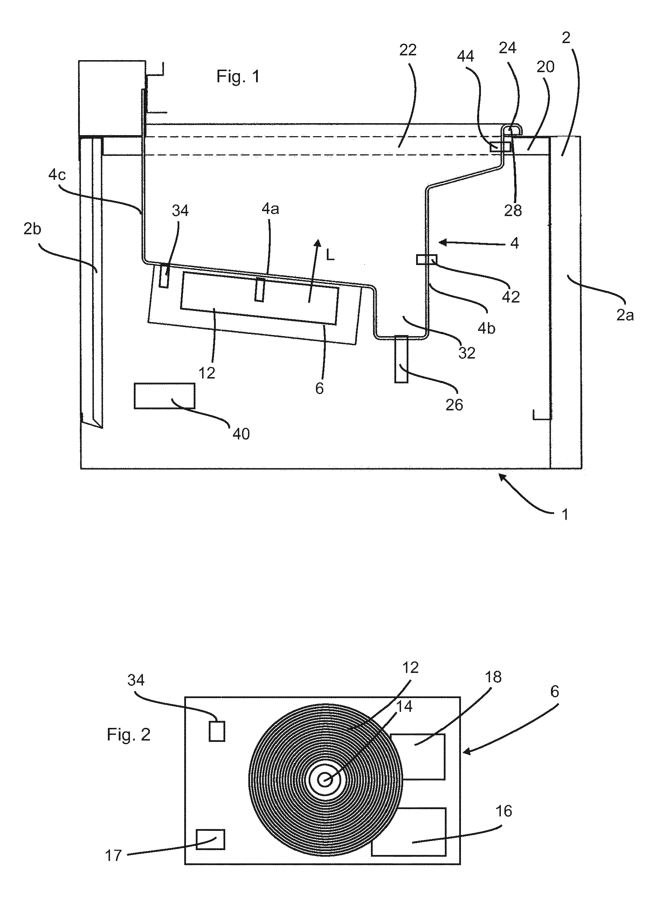

Fig. 1 zeigt eine Querschnittsdarstellung einer erfindungsgemäßen Vorrichtung 1 zum Frittieren von Lebensmitteln. Diese Vorrichtung 1 weist ein Gestell 2 auf, welches Seitenwände 2a und 2b sowie einen Träger 20 zum Halten eines Behältnisses 4 aufweist. Damit bildet das Gestell 2 eine Öffnung 22 aus, durch welche hindurch das Behältnis 4 eingeschoben werden kann. Ein sicherer Halt des Behältnisses wird dabei über den besagten Träger 20 erreicht, in welchen ein Kragen 24 des Behältnisses 4 eingreift. In diesem Bereich wäre es möglich, Schalteinrichtungen 28 vorzusehen, welche einen Betrieb einer Induktionseinrichtung 6 nur bei korrekt eingesetzten Behältnis 4 erlauben. Auch wäre es möglich, die Schalteinrichtung derart auszugestalten, dass nur spezielle Behältnisse diese schalten und auf diese Weise einen Betrieb der Induktionseinrichtung 6 ermöglichen. Das Behältnis kann auch fest angeordnet sein oder beispielsweise durch Schrauben von dem Gestell lösbar bzw. entfernbar sein.

Das Behältnis 4 weist eine Bodenfläche 4a sowie mehrere Seitenflächen 4b und 4c auf. Die Bodenfläche 4a ist dabei eben ausgebildet und verläuft schräg, wobei sie hier gegenüber einer horizontalen um einen Winkel abgewinkelt ist, der im Bereich von 10° liegt. Über diese schräge Bodenfläche 4a kann eine Frittierflüssigkeit nach Benutzung der Fritteuse in Richtung eines Aufnahmeraums 32 abfließen und gegebenenfalls über einen Abfluss 26 abgeführt werden.

Unterhalb der Bodenfläche 4a ist eine mit 6 bezeichnete Induktionseinrichtung angeordnet, welche die Bodenfläche 4a und damit auch den Inhalt des Behältnisses 4 beheizt. Diese Induktionseinrichtung 6 weist dabei eine Spule 12 auf sowie eine Temperaturmesseinrichtung, die hier im Zentrum der Spule 12 angeordnet ist. Dabei ragt diese Temperaturmesseinrichtung bzw. ein Bereich derselben in der Richtung L (vgl. Fig. 1) leicht über die Spule 12 hinaus und dient damit gleichzeitig als Abstandshalter, der die Bodenfläche 4 von der Induktionseinrichtung beabstandet. Auf diese Weise kann verhindert werden, dass das Material der Bodenfläche 4a die Spule 12 direkt kontaktiert. Es wäre jedoch auch möglich, dass mehrere derartige Abstandshalter, beispielsweise drei Abstandshalter vorgesehen sind, welche für einen ausreichenden Mindestabstand zwischen der Spule und der Bodenfläche 4a sorgen. Auch wäre es möglich, dass die Spule mit einer Schutzschicht überzogen ist, welche ebenfalls einen direkten Kontakt zwischen dem Metall der Spule und der Metall der Bodenfläche 4a verhindert.

Das Bezugszeichen 34 bezieht sich auf eine weitere Schalteinrichtung, die beispielsweise an der Induktionseinrichtung 6 angeordnet sein kann und welche nur geschaltet wird, wenn ein Behältnis in die Vorrichtung 1 korrekt eingesetzt ist. Ein Teil des Behältnisses 4 ist damit innerhalb des Gestells angeordnet, wobei dieser Teil das wesentliche Volumen des Behältnisses 4 ausmacht und ein weiterer Teil des Behältnisses 4, insbesondere dessen oberer Rand, ist außerhalb bzw. oberhalb des Gestells angeordnet.

Es wäre jedoch auch möglich, dass das Behältnis 4 über seine Bodenfläche 4a abgestützt wird. In diesem Fall könnten unterhalb der Bodenfläche Stützen vorgesehen sein. Derartige Stützen könnten auch (nicht gezeigte) Dämpfungselemente aufweisen, um insbesondere durch Induktion erzeugte Schwingungen der Bodenfläche 4a abzudämpfen. Auch könnte eine feste Verbindung zwischen der Induktionseinrichtung 6 und dem Behältnis 4 bestehen. So könnte die Induktionseinrichtung 6 als Steckmodul ausgeführt sein, das ebenfalls dem Gestell 2 entnommen werden kann. Auf diese Weise wäre es auch möglich, die Induktionseinrichtung bei bereits bestehenden Fritteusen nachzurüsten. Die vorliegende Erfindung ist daher auch auf die Verwendung einer Induktionseinrichtung und insbesondere einer Induktionseinrichtung der oben beschriebenen Art für Fritteusen und insbesondere gewerblich anwendbare Fritteusen gerichtet.

Das Bezugszeichen 42 bezieht sich auf eine erste Sensoreinrichtung, welche hier eine Temperatur der Flüssigkeit in dem Behältnis 4 erfasst. Dabei ist hier diese Sensoreinrichtung 42 in einer Seitenwand 4b angeordnet, es wäre jedoch auch möglich, diese Sensoreinrichtung beispielsweise in dem Boden 4a des Behältnisses oder in der anderen Seitenwand 4c anzuordnen.

Mittels einer zweiten Sensoreinrichtung 44 kann hier ein Füllstand der Flüssigkeit, d. h. des Frittiergutes erfasst werden. Dabei kann es sich beispielsweise um einen optischen Sensor, wie eine Lichtschranke handeln, welche feststellt, ob die Flüssigkeit überkocht.

Diese beiden Sensoreinrichtungen 42 und 44 stehen in Kontakt mit einer Reglereinrichtung 40, welche wiederum die Induktionseinrichtung 6 steuert, genauer gesagt die Leistung dieser Induktionseinrichtung 6 steuert. Wie erwähnt, könnten auch weiter Induktionseinrichtungen an den Seitenwänden 4c und 4b angeordnet sein, wobei die Regeleinrichtung 40 vorzugsweise auch diese weiteren (nicht gezeigten) Induktionseinrichtungen steuern könnte.

Fig. 2 zeigt eine detailliertere Darstellung einer Induktionseinrichtung 6. Dabei bezieht sich das Bezugszeichen 12 wieder auf eine Kupferspule, in deren Zentrum eine Temperaturmesseinrichtung 14 angeordnet ist. Das Bezugszeichen 16 kennzeichnet eine Kühleinrichtung zum Kühlen der Spule sowie der entsprechenden Elektronik. Das Bezugszeichen 17 bezieht sich auf die Kondensatoren des Resonanzkreises zum Betreiben der Induktionseinrichtung 6 und das Bezugszeichen 18 auf einen Netzfilter. Anstelle der in Fig. 2 gezeigten Ausführungsform wäre es auch möglich, mehrere Spulen anzuordnen um auf diese Weise günstiger die rechteckige Fläche abzudecken. Auch wäre es möglich, dass die Spule 12 keinen kreisförmigen Querschnitt sondern einen elliptischen Querschnitt aufweist.

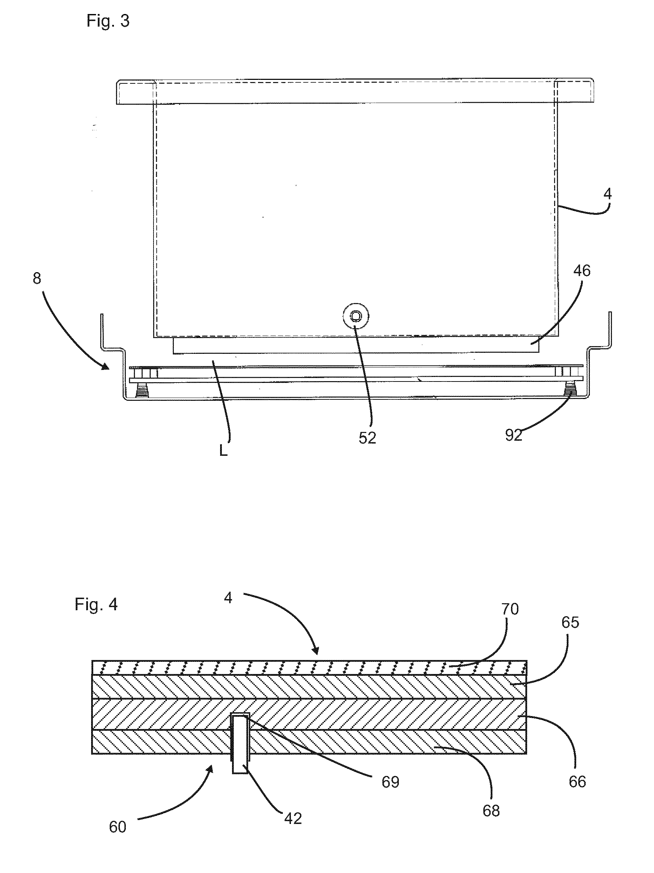

Fig. 3 zeigt eine weitere Seitenansicht einer erfindungsgemäßen Induktionsfritteuse, wobei hier insbesondere die Anordnung der Spuleneinrichtung 12 dargestellt ist. Man erkennt, dass hier zwischen der Spulenanordnung 12 und dem Behältnisboden 46 ein Luftspalt L, wie oben erwähnt, ausgeführt ist. Auf diese Weise kann für eine noch günstigere Kühlung der Induktionsspule 12 gesorgt werden. Die Induktionsspule 12 ist in ihrer Gesamtheit wiederum an einem Träger 8 angeordnet, wobei auch hier Abstandshalter 92 vorgesehen sind, welche die Induktionsspule 12 auch nach unten hin von dem Träger 8 beabstanden. Auf diese Weise ist auch von unten eine ausreichende Kühlung der Induktionsspule 12 vorgesehen.

Dabei handelt es sich hier um einen Luftspalt, der wesentlich größer ist, als der in Fig. 1 beschriebene Abstand zwischen der Induktionsspule und der Wandung des Behältnisses 4.

Daneben können Lüftereinrichtungen (nicht gezeigt) vorgesehen sein, welche der Induktionsspule 12 auch Luft zu deren Kühlung zuführen. Insgesamt kann dabei eine Luftströmung zwischen den Bereichen unterhalb des Trägers 8 und den Bereichen des Luftspaltes entstehen.

Das Bezugszeichen 52 kennzeichnet eine Temperaturmesseinrichtung, welche hier innerhalb des Behältnisses angeordnet ist.

Fig. 4 zeigt eine Schnittdarstellung eines Wandungsabschnittes eines Behältnisses 4. Vorteilhaft ist das Behältnis einheitlich in der in Fig. 4 dargestellten Weise ausgebildet. Man erkennt, dass der Wandungsabschnitt 60 des Behältnisses 4 aus mehreren übereinander angeordneten Schichten 65, 66 und 68 aufgebaut ist. Dabei bezieht sich das Bezugszeichen 64 auf eine Edelstahlschicht, welche hier dem Behältnisinneren und damit auch der zu erhitzenden Flüssigkeit zugewandt ist.

Das Bezugszeichen 68 kennzeichnet eine weitere Edelstahlschicht, welche hier der Induktionseinrichtung (nicht gezeigt) zugewandt bzw. nach außen gerichtet ist. Die beiden Stahlschichten 65 und 68 können dabei von der Induktionseinrichtung erwärmt werden. Daneben tragen diese beiden Schichten auch zur Stabilität des Behältnisses 4 bei. Zwischen den beiden Stahlschichten 65 und 68 ist eine Aluminiumschicht 66 angeordnet. Diese Aluminiumschicht 66 dient der besseren Wärmeverteilung, was insbesondere vorteilhaft ist, wenn nur eine Induktionseinrichtung vorhanden ist. Diese genannten Schichten bilden damit den Eingangs erwähnten Verbundwerkstoff.

Optional kann auf der Edelstahlschicht 65 noch eine weitere Schicht 70, wie etwa eine Schutzschicht vorgesehen sein. Auch wäre es denkbar, unterhalb der unteren Schicht 68 ebenfalls noch eine weitere Schicht vorzusehen. Die Dicke der beiden Schichten 65 und 68 liegt zwischen 1 mm und 10mm, bevorzugt zwischen 1 mm und 8mm und besonders bevorzugt zwischen 1 mm und 6mm. Die Dicke der Aluminiumschicht liegt zwischen 3mm und 15mm, bevorzugt zwischen 4mm und 12mm und besonders bevorzugt zwischen 4mm und 10mm.

Das Bezugszeichen 69 kennzeichnet eine in der Wandung angeordnete Ausnehmung, in der ein Temperatursensor 42 angeordnet ist. Dabei ragt die Ausnehmung bis in den Bereich der Aluminiumschicht 66, damit die Temperatur in diesem Bereich gemessen werden kann

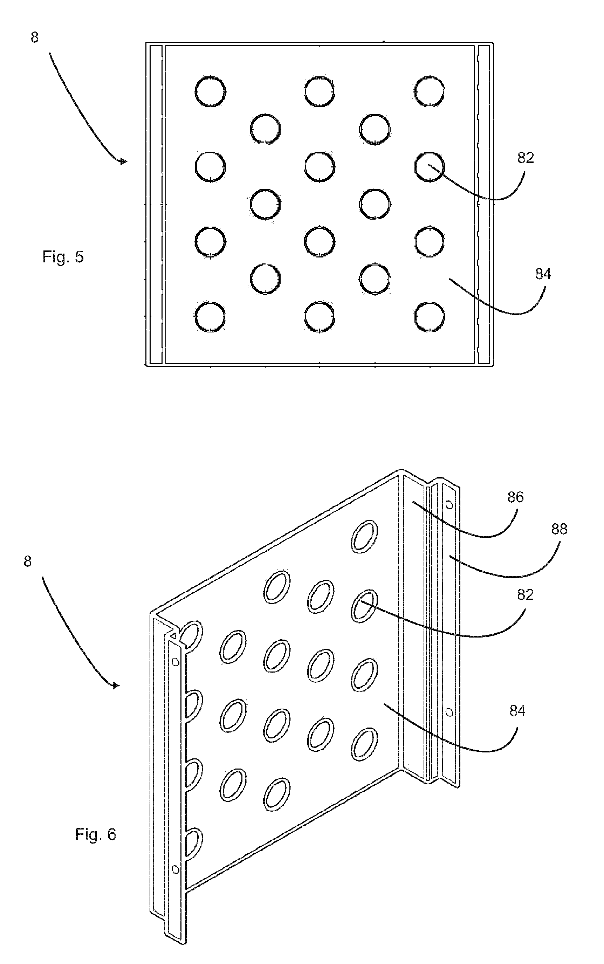

Fig. 5 zeigt eine Darstellung eines Trägers 8, an dem - wie oben erwähnt - die Spule angeordnet ist. Ein Abstand zwischen der Unterseite der Spule und dem Träger kann dabei zwischen 2mm und 20mm, bevorzugt zwischen 4mm und 16mm, bevorzugt zwischen 6mm und 10mm liegen. Auch der oben erwähnte Luftspalt weist bevorzugt eine Breite auf, die zwischen 2mm und 20mm, bevorzugt zwischen 4mm und 16mm, bevorzugt zwischen 6mm und 10mm liegt. Damit ist sowohl oberhalb der Spuleneinrichtung 12 als auch unterhalb der Spuleneinrichtung 12 ein Luftspalt vorgesehen. Vorteilhaft wird die Spuleneinrichtung nur punktuell gegenüber dem Träger abgestützt.

Der Spulenträger 8 weist, wie hier gezeigt, einen Grundkörper 84 auf, sowie eine Vielzahl von Löchern 82. Diese Löcher sind hier kreisrund ausgebildet und regelmäßig angeordnet. Anstelle von (kreisrunden) Löchern könnten jedoch auch Schlitze vorgesehen sein.

Der Spulenträger 12 ist bevorzugt aus Aluminium hergestellt. Allgemein ist bevorzugt der Träger 8 aus einem nicht magnetisierbaren Material hergestellt.

Fig. 6 zeigt eine weitere perspektivische Darstellung des Spulenträgers. Man erkennt hier auch Seitenwände 86 sowie einen Befestigungsabschnitt 88, der über einen stufenförmigen Abschnitt mit der Seitenwand 86 verbunden ist. Die Spule mitsamt ihren Abstandshaltern ist besonders bevorzugt hier zwischen diesen beiden Seitenwänden 86 und oberhalb des Bodenbereiches 84 angeordnet. Vorteilhaft ist auch der Träger 8 mit der Spule in seiner Gesamtheit demontierbar, um so beispielsweise zu Reparaturzwecken ausgetauscht werden zu können. Auch ist es möglich, dass das Behältnis 4 in seiner Gesamtheit dem Gestell entnehmbar ist.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- L: Luftspalt L
- 1: Vorrichtung
- 2: Gestell
- 2a: Seitenwand
- 2b: Seitenwand
- 4: Behältnis
- 4a: Bodenfläche
- 4b: Seitenwand
- 4c: Seitenwand
- 6: Induktionseinrichtung
- 8: Träger
- 12: (Induktions-) Spule
- 16: Kühleinrichtung
- 17: Kondensatoren
- 18: Netzfilter
- 20: Träger
- 22: Öffnung
- 24: Kragen
- 26: Abfluss
- 28: Schalteinrichtungen
- 32: Aufnahmeraum
- 34: weitere Schalteinrichtung
- 40: Regeleinrichtung
- 42: Sensoreinrichtung
- 44: Sensoreinrichtung
- 46: Behältnisboden
- 52: Temperaturmesseinrichtung
- 60: Wandungsabschnitt
- 65, 68: Stahlschicht
- 66: Aluminiumschicht
- 69: Ausnehmung
- 70: Schutzschicht
- 84: Grundkörper
- 86: Seitenwand
- 92: Abstandshalter

## Patentansprüche

1. Vorrichtung zum Erwärmen von Flüssigkeiten, mit einem Gestell (2), in dem ein Behältnis (4) zur Aufnahme eines flüssigen Mediums angeordnet ist, wobei das Behältnis (4) wenigstens abschnittsweise aus einem stromleitenden Material besteht und die Vorrichtung eine ein Magnetfeld erzeugende Induktionseinrichtung (6) aufweist, wobei diese Induktionseinrichtung (6) außerhalb des Behältnisses (4) derart angeordnet ist, dass sie wenigstens eine Außenwandung (4a) des Behältnisses (4) mit einem Magnetfeld beaufschlagt,
**dadurch gekennzeichnet, dass**
die Induktionseinrichtung (6) an einem Träger angeordnet ist, der wenigstens eine Öffnung aufweist.

2. Vorrichtung zum Erwärmen von Flüssigkeiten, mit einem Gestell (2), in dem ein Behältnis (4) zur Aufnahme eines flüssigen Mediums angeordnet ist, wobei das Behältnis (4) wenigstens abschnittsweise aus einem stromleitenden Material besteht und die Vorrichtung eine ein Magnetfeld erzeugende Induktionseinrichtung (6) aufweist, wobei diese Induktionseinrichtung (6) außerhalb des Behältnisses (4) derart angeordnet ist, dass sie wenigstens eine Außenwandung (4a) des Behältnisses (4) mit einem Magnetfeld beaufschlagt,
**dadurch gekennzeichnet, dass**
die Induktionseinrichtung (6) in einem vorgegebenen Abstand von der Außenwandung (4a) angeordnet ist, derart, dass zwischen der Induktionseinrichtung (6) ein Luftspalt ausgebildet ist.

3. Vorrichtung nach Anspruch 2,
**dadurch gekennzeichnet, dass**
die Induktionseinrichtung in einem Abstand (d) zu der Aussenwandung beabstandet ist, der zwischen 2mm und 20mm, bevorzugt zwischen 4mm und 12mm, bevorzugt zwischen 6mm und 10mm liegt.

4. Vorrichtung nach Anspruch 1,
**dadurch gekennzeichnet, dass**
der Träger (62) wenigstens ein Loch aufweist.

5. Vorrichtung nach Anspruch 4,
**dadurch gekennzeichnet, dass**
der Träger eine Vielzahl von Löchern aufweist.

6. Vorrichtung nach wenigstens einem der vorangegangenen Ansprüche,
**dadurch gekennzeichnet, dass**
zwischen der Ausnehmung des Trägers und dem Luftspalt eine Strömungsverbindung besteht, über welche Luft strömen kann.

7. Vorrichtung nach wenigstens einem der vorangegangenen Ansprüche,
**dadurch gekennzeichnet, dass**
die Vorrichtung eine Steuerungseinrichtung aufweist, welche die Vorrichtung bei thermischer Überlastung abschaltet.

8. Vorrichtung nach wenigstens einem der vorangegangenen Ansprüche,
**dadurch gekennzeichnet, dass**
die Vorrichtung einen Temperatursensor aufweist, der eine Temperatur der Induktionseinrichtung erfasst.

9. Vorrichtung nach wenigstens einem der vorangegangenen Ansprüche,
**dadurch gekennzeichnet, dass**
die Außenwandung des Behältnisses sich aus wenigstens zwei schichtartig übereinander angeordneten Komponenten unterschiedlichen Materials zusammensetzt.

10. Verfahren zum Erwärmen von Flüssigkeiten, wobei mittels einer Induktionseinrichtung wenigstens eine Wandung eines Behältnisses (4), in dem sich eine zu erwärmende Flüssigkeit befindet, erwärmt wird, wobei diese Induktionseinrichtung von der zu erwärmenden Wandung beabstandet wird,
**dadurch gekennzeichnet, dass**
wenigstens ein Bestandteil der Induktionseinrichtung gekühlt wird, indem ein gasförmiges Medium an diesen Bestandteil der Induktionseinrichtung geführt wird.

11. Verfahren nach Anspruch 9,
**dadurch gekennzeichnet, dass**
das gasförmige Medium mittels eines Luftspalts zwischen der Induktionseinrichtung und der Behältniswandung und/oder mittels wenigstens einer Öffnung, die in einem Träger, an dem die Induktionseinrichtung angeordnet ist, an den Bestandteil der Induktionseinrichtung geführt wird.
